Europäisches Patentamt

European Patent Office

Office européen des brevets

(19)

(11) Veröffentlichungsnummer: **0 258 635**
**B1**

(12) # EUROPÄISCHE PATENTSCHRIFT

(45) Veröffentlichungstag der Patentschrift:
09.05.90

(51) Int. Cl.⁵: **C03C 17/22**

(21) Anmeldenummer: 87110983.1

(22) Anmeldetag: 29.07.87

(54) **Verfahren zum Herstellen einer vorgespannten und/oder gebogenen Glasscheibe, insbesondere einer Sonnenschutzscheibe.**

(30) Priorität: 19.08.86 DE 3628051

(43) Veröffentlichungstag der Anmeldung:
09.03.88 Patentblatt 88/10

(45) Bekanntmachung des Hinweises auf die Patenterteilung:
09.05.90 Patentblatt 90/19

(84) Benannte Vertragsstaaten:
AT BE CH DE ES FR GB GR IT LI LU NL SE

(56) Entgegenhaltungen:
LU-A- 55 954

CHEMICAL ABSTRACTS, Band 77, Nr. 24, 11.
Dezember 1972, Seite 249, Zusammenfassung
Nr. 155841p, Columbus, Ohio, US; &
ZA-A-71 05 061 (JAPAN SHEET GLASS CO.,
LTD) 08.03.1972
DERWENT JAPANESE PATENTS REPORT, Sektion
Chemical, Band T, Nr. 18, 6. Juni 1972,
Zusammenfassung Nr. 29322T, Derwent Publications
Ltd, London, GB; & JP-A-72 14 821 (NIPPON SHEET
GLASS CO. LTD) 02.05.1972

(73) Patentinhaber: FLACHGLAS AKTIENGESELLSCHAFT,
Otto-Seeling-Promenade 10-14, D-8510 Fürth(DE)

(72) Erfinder: Schmitte, Franz-Josef, Dr., Rudolfstrasse 1,
D-4650 Gelsenkirchen(DE)

(74) Vertreter: Goddar, Heinz J., Dr., FORRESTER &
BOEHMERT Widenmayerstrasse 4/I,
D-8000 München 22(DE)

## Beschreibung

Die Erfindung betrifft ein Verfahren zum Herstellen einer vorgespannten und/oder gebogenen Glasscheibe aus Natron-Kalk-Silikatglas mit reduzierter Transmission, insbesondere Sonnenschutzscheibe, bei dem auf wenigstens eine Seite eines transparenten Glasträgers mindestens eine transmissionssenkende Schicht mit einem wesentlichen Gehalt an einem Metall oder einer Metallegierung aus den Elementen mit den Ordnungszahlen 22 bis 28 des periodischen Systems in einer solchen Dicke aufgebracht wird, daß die Lichtdurchlässigkeit des mit der transmissionssenkenden Schicht versehenen Glasträgers zwischen 10 und 90% derjenigen des Glasträgers allein beträgt, und ein thermischer Vorspann- und/oder Biegeprozeß in Luft bei einer Temperatur von 580° C-680° C, vorzugsweise 600° C bis 650° C, durchgeführt wird.

Glasscheiben, welche oberflächlich eine Beschichtung aus einem Metall oder einer Metallegierung aufweisen, werden auf dem Bausektor und in der Fahrzeugverglasung verwendet, um die Transmission des unbeschichteten Glasträgers in bestimmten Spektralbereichen zu reduzieren. Dies erfolgt z.B., um einen Lichtdämpfungseffekt und/oder eine Sonnenschutzwirkung zu erzielen. Dabei werden für die Metallschicht bevorzugt Metalle oder Metallegierungen aus den Elementen mit den Ordnungszahlen 22 - 28 des Periodischen Systems verwendet, wenn Glasscheiben gewünscht werden, bei denen die Beschichtung die Farbe in Durchsicht und Reflexion nicht wesentlich verändert. Als Glasträger wird dabei im allgemeinen das übliche Natron-Kalk-Silikatglas verwendet. Dieses kann zusätzlich in der Masse eingefärbt sein, wie dies bei Bronze-, Grau- und Grünglas der Fall ist. Durch diese Einfärbung in der Masse ergibt sich bereits eine Grundsonnenschutzwirkung, welche durch die Beschichtung zusätzlich verstärkt wird. Insbesondere bei der Verglasung von Kraftfahrzeugen werden häufig in der Masse eingefärbte Grüngläser eingesetzt, welche sich durch eine gute Sonnenschutzwirkung in Verbindung mit hoher Lichtdurchlässigkeit auszeichnen. Bei solchen Anwendungen sind insbesondere gemischte Verglasungen interessant, wobei ein Teil der Scheiben zusätzlich beschichtet ist. So werden z.B. die Frontscheibe und die vorderen Seitenscheiben, an die weitgehende gesetzliche Vorschriften hinsichtlich der Mindestlichtdurchlässigkeit gestellt werden, mit in der Masse eingefärbtem Grünglas ausgeführt. Für den hinteren Fahrzeugbereich, für den geringere Werte der Lichtdurchlässigkeit zulässig sind, werden bevorzugt die gleichen in der Masse eingefärbten Scheiben eingesetzt, welche jedoch zusätzlich beschichtet sind, um die Sonnenschutzwirkung weiter zu erhöhen. In vielen Anwendungsfällen u.a. der vorstehend beschriebenen Art ist es notwendig, den Glasträger thermisch vorzuspannen. Die dafür erforderlichen Temperaturen liegen im Bereich von 580° C bis 680° C, vorzugsweise im Bereich von 600° C bis 650° C. Derselbe Temperaturbereich wird auch benötigt, wenn die von der Glasherstellung her planen Glasscheiben einem Biegeprozeß unterzogen werden, wobei bislang das Aufbringen der vorgenannten farbneutralen Schichten nach abgeschlossenem Vorspann- bzw. Biegeprozeß und Abkühlen der Scheiben erfolgte.

Diese Verfahrensweise, nämlich die Beschichtung im Anschluß an den Vorspann- bzw. Biegeprozeß durchzuführen, hat verschiedene Nachteile gegenüber einer Arbeitsweise, bei der zunächst die Beschichtung aufgebracht und anschließend der Vorspann- bzw. Biegeprozeß durchgeführt würde. So können im ersteren Falle nur Festmaße beschichtet werden, da vorgespannte Scheiben bekanntlich nicht zerschnitten werden können. Ein weiterer Nachteil besteht bei der bisher gehandhabten Vorgehensweise darin, daß durch die hohen Temperaturen des Vorspann- bzw. Biegeprozesses Verunreinigungen auf der Glasoberfläche häufig mit dieser eine so feste Bindung eingehen, daß sie bei der anschließenden Oberflächenreinigung vor Durchführung des Beschichtungsprozesses nicht mehr soweit entfernt werden können, wie dies für den anschließenden Beschichtungsprozeß wünschenswert wäre. Eine Verfahrensweise, bei welcher planes Glas, insbesondere in Form von Einheitsabmessungen, zunächst beschichtet und dann vorgespannt bzw. gebogen werden könnte, hätte demgegenüber beträchtliche Vorteile. Diese Vorgehensweise ist jedoch bei den wegen der Farbneutralität bevorzugt eingesetzten Schichten aus Metallen oder Metallegierungen der Elemente mit den Ordnungszahlen 22 - 28 bislang nicht möglich gewesen, weil durch die erforderlichen Temperaturen oberhalb von 580° C störende Schichtveränderungen - insbesondere durch die Oxidation der Schichten - hervorgerufen werden. Dies ist beispielsweise in der DE-OS 17 71 223 beschrieben, aus der hervorgeht, daß Metallschichten der vorstehend beschriebenen Art durch einen Wärmebehandlungsschritt bei Temperaturen zwischen 350° C und 677,55° C oxidiert werden, wodurch sich die Transmission der Schichten insbesondere im nahen Infraroten erhöht und damit in unerwünschter Weise die Sonnenschutzwirkung gegenüber derjenigen von nicht oxidierten Metallschichten verschlechtert wird. Auch bei der Kombination von Metallschichten der vorgenannten Art mit transparenten Oxidschichten, wie sie beispielsweise in der US-PS 38 46 152 beschrieben ist, läßt sich keine ausreichende Stabilität gegenüber einer Temperaturbelastung erzielen, wie sie beim Vorspann- bzw. Biegeprozeß auftritt.

Um die vorgenannten Schwierigkeiten zu beheben und die genannten Metalle oder Metallegierungen vor der Oxidation während des Vorspann- oder Biegeprozesses zu schützen, wurde bereits vorgeschlagen (deutsche Patentanmeldung P 35 44 840.7-45), auf die Metall- bzw. Metallegierungsschicht eine Metalloxidschicht mit definiertem Sauerstoffdefizit in einer Dicke von 10 nm bis 100 nm aufzubringen, wodurch beim Vorspann- oder Biegeprozeß keine nennenswerte Sauerstoffdiffusion bis zur Metall- bzw. Metallegierungsschicht stattfinden kann. Diese Lösung hat sich zwar grundsätzlich bewährt, bedingt aber, daß in verfahrenstechnisch aufwendig zu kontrollierender Weise zusätzlich zur Metall- bzw. Metallegierungsschicht eine unterstöchiometrische Oxidschicht aufgebracht werden muß, welche in unerwünschter Weise das Reflexionsvermögen der beschichteten Scheibe von der Glasseite her gesehen erhöht oder zumindest den Entspiegelungseffekt der einen Grenzfläche, der durch das Aufbringen der Metall- oder Metallegierungsschicht entsteht, wieder zunichte macht.

Es ist bereits bekannt (DE-PS 25 26 209), Schichten aus Silizium zu Sonnenschutzzwecken auf Glas herzustellen, wobei diese Schichten jedoch eine stark braun gefärbte Durchsicht und ein hohes Reflexionsvermögen von mehr als 50% aufweisen, welches sich auch durch einen Vorspannprozeß nicht ändert. Für Anwendungen im Automobilsektor sind derartige Schichtsysteme daher wegen der bestehenden gesetzlichen Bestimmungen über die Reflexion der Scheiben nach außen nicht geeignet.

Aus der DE-OS 21 38 034 ist es weiterhin bereits bekannt, durch Verwendung von Nitriden, Carbiden und Siliziden der Elemente der Gruppen IV, V und VI und damit auch der Elemente mit den Ordnungszahlen 22 bis 28 des Periodischen Systems Sonnenschutaschichten herzustellen, die verhältnismäßig korrosionsbeständig und im Falle des Chromsilizids auch sehr abriebfest (siehe US-PS 40 51 297) sind. Die vorgenannten Silizidschichten, die durch DC- oder HF-Kathodenzerstäubung herge stellt wurden, wiesen jedoch, wie dies aus den in der DE-OS 21 38 034 beschriebenen Beispielen hervorgeht, in der Durchsicht eine starke Farbverschiebung auf, so daß sie für Anwendungen, bei denen farbneutrale transmissionssenkende Schichten gefordert werden, nicht geeignet sind. Aus heutiger Sicht ist zu vermuten, daß die dort beschriebenen Schichten verfahrensbedingt einen relativ hohen Oxidgehalt aufgewiesen haben, der die Farbverschiebung verursacht haben dürfte. Ein Hinweis auf das Verhalten dieser Schichten beim Biegen und/oder Vorspannen so beschichteter Glasscheiben ist der vorgenannten Offenlegungsschrift nicht zu entnehmen.

Der Erfindung liegt daher die Aufgabe zugrunde, das Verfahren der eingangs genannten Art dahingehend weiterzubilden, daß die vorstehend beschriebene Nachteile insgesamt vermieden und in einfacher, reproduzierbarer Weise farbneutrale transmissionssenkende Schichten auf Glas erhalten werden können, die auch durch einen Vorspannund/oder Biegeprozeß ihre optischen Eigenschaften nur unwesentlich ändern.

Erfindungsgemäß wird diese Aufgabe dadurch gelöst, daß die transmissionssenkende Schicht vor dem thermischen Vorspann- und/oder Biegeprozeß durch gemeinsames Aufbringen des Metalls oder der Metallegierung aus den Elementen mit den Ordnungszahlen 22 bis 28 und Silizium als Metallsilizidschicht mit einem Siliziumgehalt von wenigstens 45 atom-% durch Magnetron-Kathodenzerstäubung hergestellt wird.

Dabei kann vorgesehen sein, daß die Metallsilizidschicht durch Sputtern eines siliziumhaltigen Metallegierungstargets aufgebracht wird.

Alternativ hierzu kann auch vorgesehen sein, daß die Metallsilizidschicht durch Ko-Sputtern einer Metallbzw. einer siliziumfreien Metallegierungskathode und einer Siliziumkathode hergestellt wird.

Eine weitere Ausführungsform der Erfindung sieht vor, daß eine Metallsilizidschicht der Zusammensetzung $MeSi_n$, mit $n = 1,2$, aufgebracht wird. Derartige stöchiometrische Zusammensetzungen ergeben verhältnismäßig homogene Schichten, die besonders gut reproduzierbare Eigenschaften aufweisen und minimal oxidationsanfällig sind; auch sind nach dieser Ausführungsform der Erfindung hergestellte Schichten besonders korrosionsbeständig und abriebfest.

Dabei kann auch vorgesehen sein, daß eine Metallsilizidschicht der Zusammensetzung $NiCrSi_2$, $FeSi_2$, $TiSi_2$, $CrSi_2$, oder $CoSi_2$ aufgebracht wird.

Alternativ hierzu kann auch vorgesehen sein, daß eine Metallsilizidschicht der Zusammensetzung $NiSi$ und/oder $NiSi_2$ aufgebracht wird. Diese Ausführungsform der Erfindung hat den besonderen Vorteil, daß Nickelsilizid-Targets pulvermetallurgisch gut herstellbar sind.

Schließlich ist die Erfindung in bevorzugter Ausführungsform dadurch gekennzeichnet, daß die Metallsilizidschicht in einer Dicke von 5 bis 80 nm aufgebracht wird. Bei diesem Dickenbereich der Metallsilizidschicht ergeben sich Schichten, die zu einer Transmissionsabsenkung um 10 bis 90% führen, bei entsprechender Einstellung der Schichtdicke insbesondere auch zu einer Absenkung der Lichttransmission der Scheiben auf etwa 40 bis 60%. In diesem gerade für Kfz-Anwendungen besonders interessanten Bereich wird im übrigen auch eine Entspiegelung des Glases von der unbeschichteten Seite her gesehen bewirkt, während zu größeren Schichtdicken hin das Reflexionsvermögen naturgemäß wieder zunimmt. In dieser Entspiegelungswirkung gerade im bevorzugten Lichttransmissionsbereich liegt ein besonderer Vorzug erfindungsgemäß hergestellter Scheiben.

Der Erfindung liegt die überraschende Erkenntnis zugrund, daß Metallsilizidschichten, die in der beanspruchten Weise einerseits durch Magnetron-Kathodenzerstäubung und zum anderen mit dem beanspruchten Gehalt an Silizium aufgebracht werden, ihre optischen Eigenschaften in Ansicht und Durchsicht beim Vorspann- oder Biegeprozeß praktisch nicht ändern. Insbesondere bleibt die Durchsicht grau-neutral, während das Licht-Reflexionsvermögen auf der der transmissionssenkenden Schicht abgewandten Seite des Glases in der Regel sogar etwas abnimmt. Dieses Verhalten ist insoweit überraschend, als, wie schon ausgeführt, von reinen Übergangsmetallschichten bekannt ist, daß sie beim Vorspannprozeß oxidieren und damit ihre optischen Eigenschaften völlig ändern, während reine Siliziumschichten den Vorspann-Prozeß weitgehend unverändert überstehen, jedoch ein hohes Reflexionsvermögen aufweisen. Die Magnetron-Kathodenzerstäubung ist zur Herstellung der vorgenannten Schichten erfindungswesentlich, da dabei genügend hohe Abstäubraten erzielt werden, die verhindern, daß die Reaktion des Metalls oder Siliziums mit dem in üblichen Hochvakuumanlagen befindlichen Restgas zur Oxidbildung führt. Anderenfalls, insbesondere bei der üblichen Kathodenzerstäubung, wie sie beispiels weise bei der Vorgehensweise gemäß DE-OS 21 38 034 angewendet wird, werden die Schichten während des Aufsputterns zum Teil oxidiert, wodurch die Lichtdurchlässigkeit zu hoch wird, die Durchsicht gefärbt erscheint und außerdem das Lichtreflexionsvermögen stark ansteigt.

Wird die Metallsilizidschicht nach der Erfindung durch Ko-Sputtern eines oder mehrerer Metalle mit der Ordnungszahl 22 bis 28 und eines Silizium-Targets hergestellt, so ist darauf zu achten, daß das Verhältnis von Metall und Silizium beispielsweise durch Wahl der Abstäubrate richtig eingestellt wird. Verfahrenstechnisch einfacher ist es, das Metallsilizid in der gewünschten Zusammensetzung, von einem Legierungstarget ausgehend, aufzubringen, da hier nur eine Kathode mit einem homogenen Material zu kontrollieren ist. Der Umstand, daß ein Silizid-Legierungstarget nicht mit der gleichen hohen Reinheit hergestellt werden kann wie die Ausgangsmaterialien, ist beim Einsatz des Materials als Sonnenschutzschicht unerheblich, im Gegensatz zur Halbleiterelektronik, bei der Silizide als Kontaktschichten eingesetzt werden.

Der Metallgehalt der Silizidschicht sollte im übrigen erfindungsgemäß etwa 25 atom-% nicht wesentlich unterschreiten, da zu höheren Siliziumgehalten hin unerwünschte optische Eigenschaften des Siliziums in Erscheinung tretet können. Im übrigen liegt es durchaus innerhalb des Erfindungsgedankens, bei der Durchführung des Verfahrens nach der Erfindung danach hergestellte Schichten lediglich Teile des Glasträgers bedecken zu lassen, beispielsweise in Form von Blendschutzstreifen entlang einer oder mehrerer der Kanten von Kfz-Scheiben.

Weitere Merkmale und Vorteile der Erfindung ergeben sich aus der nachstehenden Beschreibung, in der die Erfindung unter Bezugnahme auf die Zeichnung anhand von Ausführungsbeispielen weiter erläutert ist. Dabei zeigt:

Fig. 1 die spektrale Transmission nach Beispiel I hergestellter Glasscheiben vor (10) und nach (12) einer Wärmebehandlung bei Vorspanntemperatur;

Fig. 2. die spektrale Transmission nach Beispiel II hergestellter Glasscheiben vor (10) und nach (12) einer Wärmebehandlung bei Vorspanntemperatur;

Fig. 3 die spektrale Transmission nach Beispiel III hergestellter Glasscheiben vor (10) und nach (12) einer Wärmebehandlung bei Vorspanntemperatur;

Fig. 4 die spektrale Transmission nach Beispiel IV hergestellter Glasscheiben vor (10) und nach (12) einer Wärmebehandlung bei Vorspanntemperatur; und

Fig. 5 die spektrale Transmission nach Beispiel V hergestellter Glasscheiben vor (10) und nach (12) einer Wärmebehandlung bei Vorspanntemperatur, wobei hier zusätzlich die Transmissionskurve (13) einer mit einer Kobaltoxidschicht versehenen Vergleichsscheibe wiedergegeben ist.

**Beispiel I:**

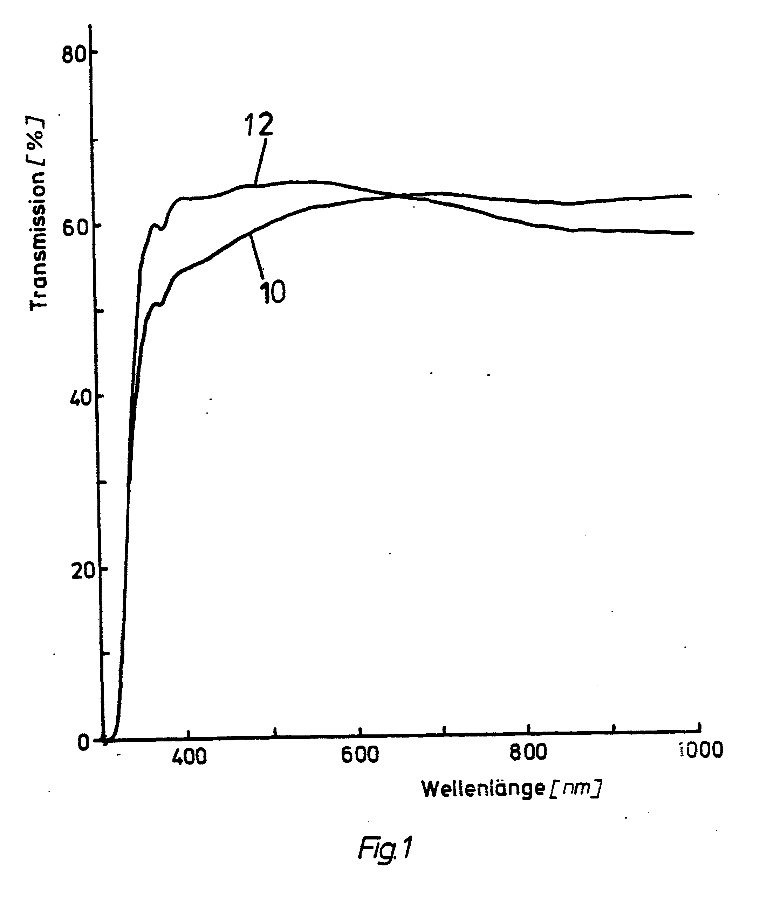

In einer Vakuum-Beschichtungsanlage, welche mit Beschichtungseinrichtungen für Magnetron-Kathodenzerstäubung ausgerüstet war, wurde auf eine Floatglasscheibe im Format 10 x 10 cm$^2$ durch gleichzeitiges Zerstäuben eines Nickeltargets und eines Siliziumtargets in einer Argon-Atmosphäre bei einem Druck von 6 x 10$^{-3}$ mbar eine Schicht mit einer Lichtdurchlässigkeit von 60% aufgebracht. Die Abstäubraten waren dabei so gewählt, daß die Schichtzusammensetzung etwa 30 atom-% Nickel und 70 atom-% Silizium betrug. Dies wurde mit Hilfe der Auger-Elektronenspektroskopie überprüft. Die beschichtete Scheibe wurde anschließend einem Vorspannprozeß unterzogen. Danach wies die beschichtete Scheibe nach wie vor eine grau-neutrale Durchsicht auf. Die Lichtdurchlässigkeit betrug 62% und die Beschichtung zeigte eine hohe Korrosions- und Abriebfestigkeit. Figur 1 zeigt, daß die thermische Behandlung bei Vorspanntemperatur die Neutralfarbigkeit der Scheibe nicht nachteilig verändert und insgesamt die optischen Eigenschaften nur wenig beeinflußt hat.

**Beispiel II:**

Es wurde wie in Beispiel I verfahren, jedoch wurde anstelle der Targets aus Nickel und Silizium ein Target aus Nickelsilizid mit der Zusammensetzung 50,5 gew.% Ni und 49,5 gew.% Si verwendet. Mit diesem Target wurde eine Schicht in einer solchen Dicke aufgebracht, daß die beschichtete Scheibe eine Lichtdurchlässigkeit von 18,4 % aufwies.

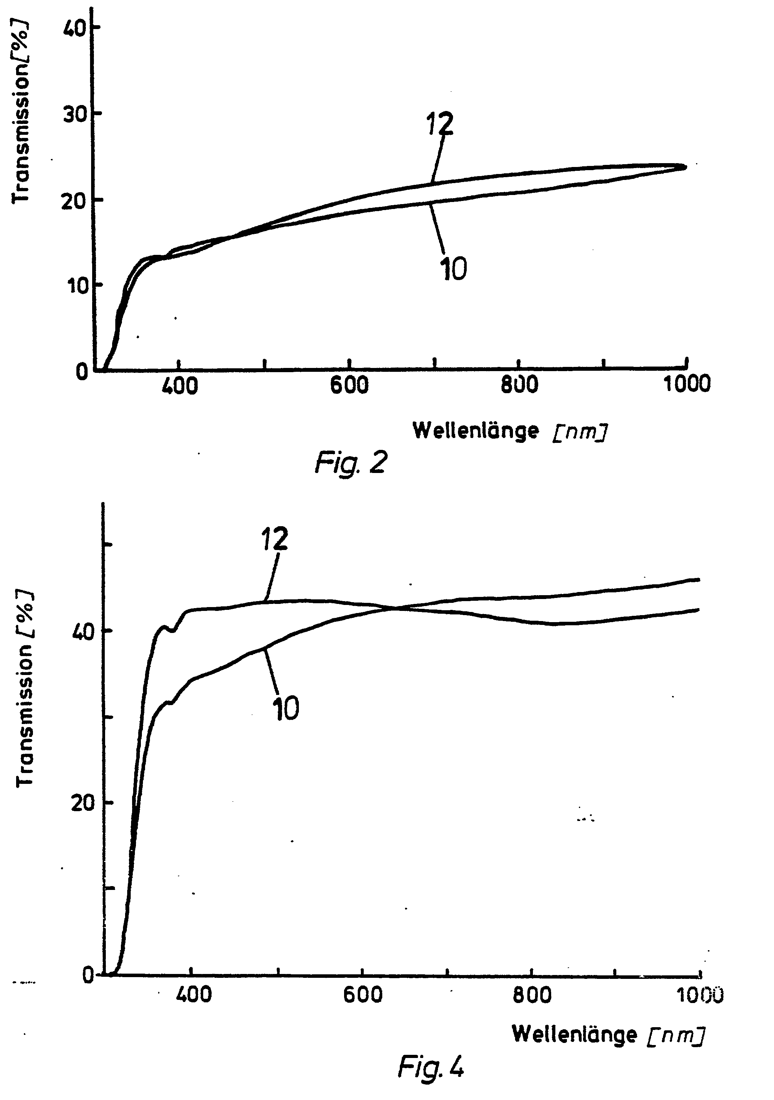

Durch das Vorspannen erhöhte sich die Lichtdurchlässigkeit nur auf 20%. Die Schichteigenschaften waren wie in Beispiel I. Figure 2 zeigt daß die thermische Behandlung bei Vorspanntemperatur die Neutralfarbigkeit der Scheibe nicht nachteilig verändert und insgesamt die optischen Eigenschaften nur wenig beeinflußt hat.

**Beispiel III:**

Wie in Beispiel I wurde eine Metall-Silizium-Schicht aufgebracht. Anstelle des Nickel-Targets wurde jedoch ein Kobalt-Target verwendet. Die Abstäubraten wurden so eingestellt, daß die Schichtzusammensetzung etwa 45 atom-% Kobalt und 55 atom-% Silizium und die Lichtdurchlässigkeit der beschichteten Scheibe 54% betrug.

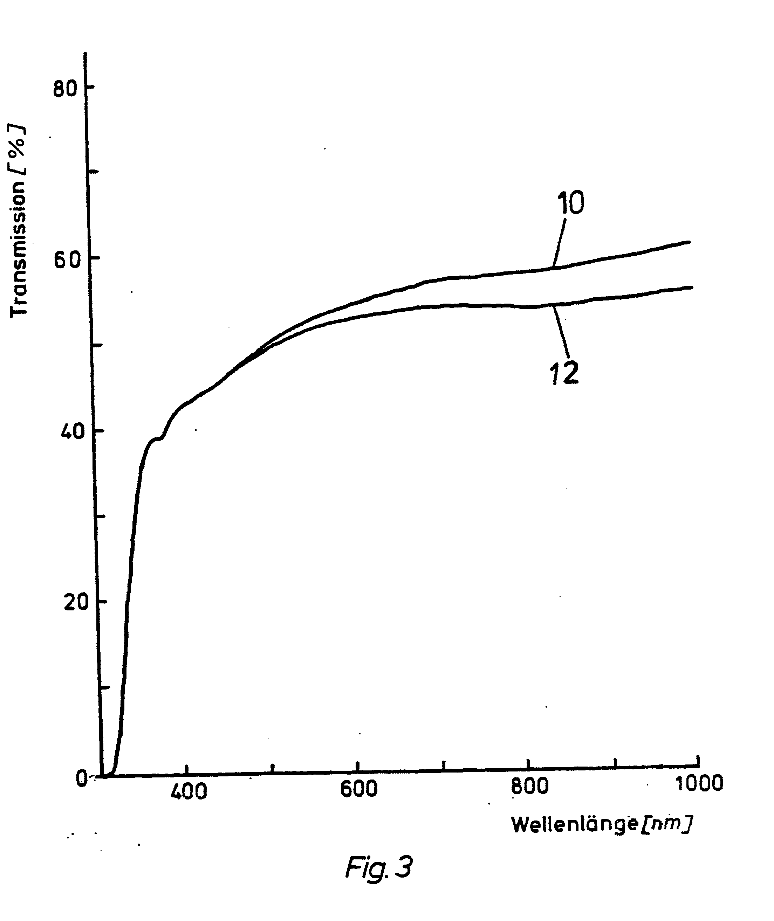

Nach dem Vorspannprozeß ergab sich eine Lichtdurchlässigkeit von 55% bei sonst unveränderten optischen Eigenschaften (Fig. 3).

**Beispiel IV:**

Durch Ko-Sputtern eines Targets aus Chrom und eines Targets aus Silizium wurde in einer Magnetron-Zerstäubungsanlage wie in Beispiel I eine Schicht mit einer Lichtdurchlässigkeit von 35% aufgebracht. Die Abstäubraten waren in diesem Fall so gewählt, daß die Schichtzusammensetzung etwa 60 atom-% Silizium und 40 atom-% Chrom aufwies.

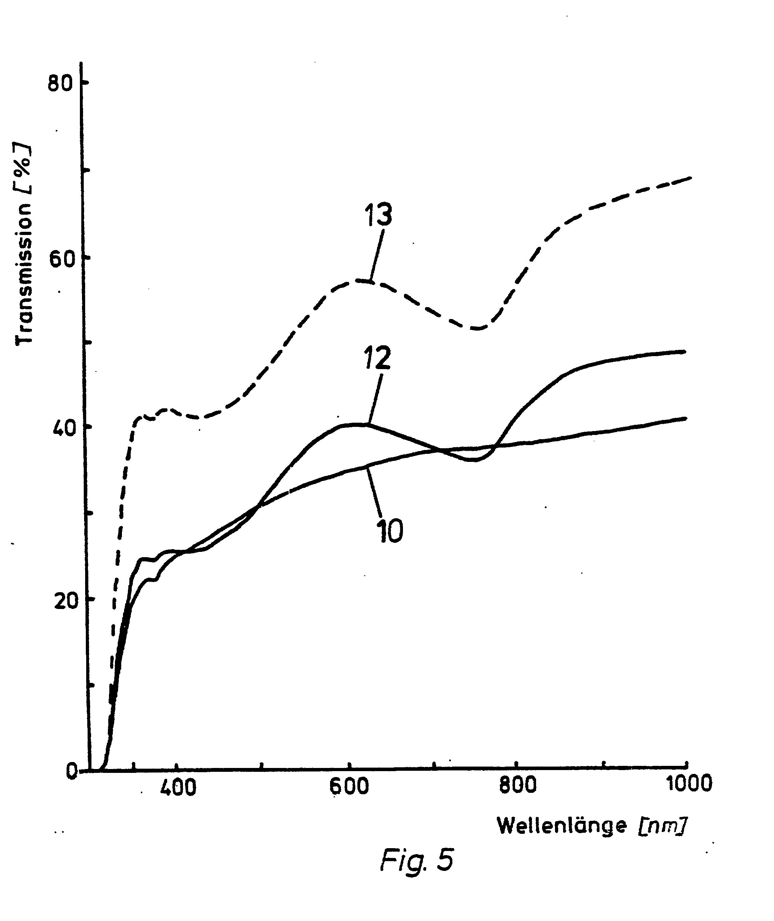

Auch bei der so beschichteten Scheibe wurde nach dem Vorspannprozeß keine Veränderung der optischen Eigenschaften festgestellt (Fig. 4).

Beispiel V:(Vergleichsbeispiel:)

In einer Magnetron-Kathodenzerstäubungsanlage, wie in Beispiel I beschrieben, wurde durch gleichzeitiges Zerstäuben eines Kobalt-Targets und eines Silizium-Targets eine Schicht mit einer Lichtdurchlässigkeit von 32% hergestellt. Die Beschichtungsparameter waren dabei so gewählt, daß die Schicht eine Zusammensetzung von etwa 65 atom-% Kobalt und 35 atom-% Silizium aufwies. Kurve 10 in Fig. 5 zeigt den spektralen Verlauf der Transmission dieser Schicht auf 4 mm Floatglas vor dem Vorspannprozeß. Er unterscheidet sich nicht sehr wesentlich (abgesehen von der Transmissionshöhe) von Kurve 10 in Beispiel III (Fig. 3). Durch den Vorspannprozeß erhöht sich die Lichtdurchlässigkeit auf 39%. Die Durchsicht wird stark umbral, und auch die Reflexion zeigt einen gelb-braunen Farbstich.

Dies spiegelt sich auch im spektralen Verlauf des Transmissionsvermögens wieder, der in Kurve 12 von Fig. 5 dargestellt ist. Die Ursache für den Farbstich ist in dem zu hohen Kobaltanteil der Schicht zu sehen, der beim Vorspannprozeß zu Kobaltoxid wird und die Farbveränderungen hervorruft.

Als Hinweis dafür ist zum Vergleich in Kurve 13 von Fig. 5 das spektrale Transmissionsvermögen einer reinen Kobaltoxidschicht dargestellt. Es zeigt dieselben charakteristischen Strukturen, die auch in Kurve 12 zu finden sind.

Bezugszeichenliste

10 Transmissionskurve (spektral) einer beschichteten Scheibe vor der Wärmebehandlung bei Vorspanntemperatur

12 Transmissionskurve (spektral) einer beschichteten Scheibe nach der Wärmebehandlung bei Vorspanntemperatur

13 Transmissionskurve einer mit einer Kobaltoxidschicht zum Vergleich beschichteten Scheibe

**Patentansprüche**

1. Verfahren zum Herstellen einer vorgespannten und/oder gebogenen Glasscheibe aus Natron-Kalk-Silikatglas mit reduzierter Transmission, insbesondere Sonnenschutzscheibe, bei dem auf wenigstens eine Seite eines transparenten Glasträgers mindestens eine transmissionssenkende Schicht mit einem wesentlichen Gehalt an einem Metall oder einer Metallegierung aus den Elementen mit den Ordnungszahlen 22 bis 28 des periodischen Systems in einer solchen Dicke aufgebracht wird, daß die Lichtdurchlässigkeit des mit der transmissionssenkenden Schicht versehenen Glasträgers zwischen 10 und 90% derjenigen des Glasträgers allein beträgt, und ein thermischer Vorspann- und/oder Biegeprozeß in Luft bei einer Temperatur von 580° C - 680° C, vorzugsweise 600° C bis 650° C, durchgeführt wird, dadurch gekennzeichnet, daß die transmissionssenkende Schicht vor dem thermischen Vorspann- und/oder Biegeprozeß durch gemeinsames Aufbringen des Metalles oder der Metallegierung aus den Elementen mit den Ordnungszahlen 22 bis 28 und Silizium als Metallsilizidschicht mit einem Siliziumgehalt von wenigstens 45 atom-% durch Magnetron-Kathodenzerstäubung hergestellt wird.

2. Verfahren nach Anspruch 1, dadurch gekennzeichnet, daß die Metallsilizidschicht durch Sputtern eines siliziumhaltigen Metallegierungstargets aufgebracht wird.

3. Verfahren nach Anspruch 1, dadurch gekennzeichnet, daß die Metallsilizidschicht durch Ko-Sputtern einer Metall- bzw. einer siliziumfreien Metallegierungskathode und einer Siliziumkathode hergestellt wird.

4. Verfahren nach einem der vorangehenden Ansprüche, dadurch gekennzeichnet, daß eine Metallsilizidschicht der Zusammensetzung $MeSi_n$, mit n = 1,2, aufgebracht wird.

5. Verfahren nach Anspruch 4, dadurch gekennzeichnet, daß eine Metallsilizidschicht der Zusammensetzung $NiCrSi_2$, $FeSi_2$, $TiSi_2$, $CrSi_2$ oder $CoSi_2$ aufgebracht wird.

6. Verfahren nach Anspruch 4, dadurch gekennzeichnet, daß eine Metallsilizidschicht der Zusammensetzung $NiSi$ und/oder $NiSi_2$ aufgebracht wird.

7. Verfahren nach einem der vorangehenden Ansprüche, dadurch gekennzeichnet, daß die Metallsilizidschicht in einer Dicke von 5 bis 80 nm aufgebracht wird.

**Claims**

1. A process for the production of a tempered and/or curved pane of soda lime silicate glass having reduced transmission, more particularly a tinted pane, in which at least one transmission-reducing layer having a substantial content of a metal or metal alloy consisting of elements having the numbers 22 to 28 in the Periodic System is applied to at least one side of a transparent glass support in a thickness such that the light transparency of the glass support provided with the transmission-reducing layer is between 10 and 90% of that of the glass support alone, and a thermal tempering and/or bending treatment is given in air at a temperature of from 580°C to 680°C, preferably 600°C to 650°C, characterised in that the transmission-reducing layer is produced before the thermal tempering and/or bending treatment, by joint application of the metal or metal alloy consisting of elements 22 to 28 and silicon as a metal silicide layer with a silicon content of at least 45 atom-% by magnetron cathode sputtering.

2. A process according to claim 1, characterised in that the metal silicide layer is applied by sputtering a silicon-containig metal alloy target.

3. A process according to claim 1, characterised in that the metal silicide layer is produced by Ko sputtering of a metal or of a silicon-free metal alloy cathode and a silicon cathode.

4. A process according to any one of the preceding claims, characterised in that a metal silicide lay-

er having the composition $MeSi_n$, with $n = 1.2$, is applied.

5. A process according to claim 4, characterised in that a metal silicide layer having the composition $NiCrSi_2$, $FeSi_2$, $TiSi_2$, $CrSi_2$ or $CoSi_2$ is applied.

6. A process according to claim 4, characterised in that a metal silicide layer having the composition $NiSi$ and/or $NiSi_2$ is applied.

7. A process according to any one of the preceding claims, characterised in that the metal silicide layer is applied in a thickness of from 5 to 80 nm.

## Revendications

1. Procédé de fabrication d'une vitre trempée et/ou bombée, en verre de silicate calcaire natron avec une transmission réduite, notamment d'une vitre de protection solaire, selon lequel on applique, sur au moins un côté d'un substrat de verre transparent, au moins une couche réduisant la transmission, avec une teneur substantielle d'un métal ou d'un alliage métallique d'éléments de la classification périodique présentant un numéro de 22 à 28, avec une épaisseur telle que la transparence à la lumière du substrat de verre pourvu de sa couche réduisant la transmission, soit comprise entre 10 et 90% de celle du substrat de verre seul, et selon lequel on effectue, à l'air, une opération thermique de trempe et/ou de contrage à une température de 580°C à 680°C, de préférence 600°C à 650°C, procédé caractérisé en ce que la couche réduisant la transmission est constituée, avant l'opération thermique de trempe et/ou de contrage, par l'application simultanée du métal ou de l'alliage métallique d'éléments présentant le numéro d'ordre 22 à 28, et de silicium, sous la forme d'une couche de siliciure métallique avec une teneur en silicium d'au moins 45% en atomes, par pulvérisation cathodique au magnétron.

2. Procédé selon la revendication 1, caractérisé en ce que la couche de siliciure métallique est appliquée par crépitement d'une cible en alliage métallique renfermant du silicium.

3. Procédé selon la revendication 1, caractérisé en ce que la couche de siliciure métallique est réalisée par crépitement simultané d'une cathode métallique ou en alliage métallique et d'une cathode en silicium.

4. Procédé selon l'une des revendications précédentes, caractérisé en ce que l'on applique une couche de silisiure métallique de composition $MeSi_n$, avec $n = 1,2$.

5. Procédé selon la revendication 4, caractérisé en ce que l'on applique une couche de siliciure métallique de composition $NiCrSi_2$, $FeSi_2$, $TiSi_2$, $CrSi_2$, ou $CoSi_2$.

6. Procédé selon la revendication 4, caractérisé en ce que l'on applique une couche de siliciure métallique de composition $NiSi$ et/ou $NiSi_2$.

7. Procédé selon l'une des revendications précédentes, caractérisé en ce que la couche de siliciure métallique est appliquée avec une épaisseur de 5 à 80 nm.

EP 0 258 635 B1

Fig. 1

EP 0 258 635 B1

Fig. 2

Fig. 4

Fig. 3

Fig. 5